# EUROPEAN PATENT SPECIFICATION

(11) **EP 3 735 155 B1**
(45) Date of publication and mention of the grant of the patent: **09.04.2025**
(21) Application number: 19735827.8
(22) Date of filing: 03.01.2019
(51) Int. Cl.: A47C 27/06, A47C 27/07, B65G 9/00

(54) **REINFORCED POCKET SPRING MATTRESS**
VERSTÄRKTE TASCHENFEDERMATRATZE
MATELAS À RESSORTS ENSACHÉS RENFORCÉ

(30) Priority: 04.01.2018 SE 1850010
(43) Date of publication of application: 11.11.2020
(73) Proprietor: Inter IKEA Systems B.V., 2616 LN Delft (NL)
(72) Inventor: NYGREN, Joacim, 343 38 Älmhult (SE)
(74) Representative: Ström & Gulliksson AB
(86) International application number: PCT/SE2019/050002
(87) International publication number: WO 2019/135702

(56) References cited:
- WO-A1-2009/102362
- WO-A1-2015/081633
- WO-A1-99/35081
- WO-A1-99/35081
- GB-A- 2 514 248
- US-A- 1 741 847
- US-A- 3 142 071
- US-A- 4 052 760
- US-A- 6 158 071
- US-A1- 2004 025 256
- US-A1- 2004 025 256
- US-A1- 2011 265 266
- US-A1- 2011 265 266

## Description

### Technical Field

The present invention relates to a pocket spring mattress, and more specifically to a reinforced pocket spring mattress comprising two layers of springs.

### Prior Art

Pocket spring mattresses are a common type of mattresses, where, most often, coil springs are arranged in fabric material pockets forming elongated spring strings. The spring strings are then arranged side by side thereby providing a mattress with individual springs being held together by the fabric normally made from a nonwoven material. As the techniques for manufacturing mattresses improve, customers have come to expect ever improving performance from new mattresses which are made available on the market. For instance, mattresses are available with zones having varying stiffness to suit different users.

To provide an improved sense of stability and to avoid that a person rolls of the side of the bed, mattresses are commonly designed with a frame or other type of reinforcement around the edges of the mattress. One known example of such frames are for instance a foam box construction, where a polyurethane frame is used to reinforce the edges. Another example is a steel frame construction.

US 2004/0025256 A1 describes a multilayered bedding product comprising a spring core made up of an upper layer and a lower layer of pocketed springs. It is suggested that border wires extend around the perimeter of the spring core, or that border rods are placed around the periphery of the assembly.

As many modern mattresses comprises two layers of springs, the complexity to achieve sufficient edge reinforcement for the mattresses increase. An alternative to the prior art solutions is therefore sought after, which provides improved performance at a lower cost.

### Summary

It is an object of the invention to at least partly overcome one or more of the above-identified limitations of the prior art. In particular, it is an object to provide a mattress which costs less to produce, a method for manufacturing the mattress, and a machine configured to perform the method for manufacturing the mattress.

According to one aspect of the invention a pocket spring mattress is provided. The mattress comprises a plurality of double layer spring units arranged in rows and columns to form a rectangular shaped mattress, each double layer spring unit comprises a first pocket spring unit arranged axially onto a second pocket spring unit. Each spring unit comprises a number of springs and a fabric pocket enclosing the springs. The springs comprises reference springs having a first spring constant and frame springs having a second spring constant being greater than the first spring constant, and the frame springs are arranged in at least one of the first and second pocket spring units of at least one outermost row or column of the double layered spring units. The edge(s) of the double layered mattress can in this way be reinforced in an inexpensive way, without use of additional components such as frames or wires. Preferably, the frame springs are arranged in at least one of the first and second pocket spring units of at least one outermost row or column of the double layered spring units in a configuration such that the edge of the mattress is reinforced.

In an embodiment, the frame springs are arranged in at least one of the first and second pocket spring units of at least one outermost row or column of the double layered spring units in a configuration such that only the edge of the mattress is reinforced.

A series of adjacent double layer spring units may be attached to each other to form an elongated spring string, simplifying the manufacturing of the mattress.

Each spring string may further be arranged side by side with another spring string forming an upper spring layer formed by the first pocket spring units, and a lower spring layer formed by the second pocket spring units.

Frame springs may be arranged in at least one of the first and second pocket spring units of at least two adjacent outermost rows or columns of the double layered spring units.

Frame springs may furthermore be arranged only in the first pocket spring units of two adjacent outermost rows and columns of the double layered spring units, forming a reinforced edge around the circumference of the mattress.

In one embodiment, frame springs may be arranged only in the second pocket spring units of two adjacent outermost rows and columns of the double layered spring units, forming a reinforced edge around the circumference of the mattress.

The second spring constant of the frame springs may be at least 15%, and preferably at least 30% higher than the first spring constant of the reference springs.

Furthermore, a material of the fabric pocket may be a nonwoven fabric material comprising thermoplastic material.

In one embodiment, each spring string comprises between 10 and 50 double layered spring units per meter of spring string, preferably between 10 and 20, even more preferably in the range of 15 double layered spring units per meter of spring string and wherein each spring string is attached by means of an adhesive, preferably hot melt adhesive, side by side to another spring string.

In a second aspect, a method for manufacturing a plurality of double layer spring units arranged in a spring string configured to form a mattress according to the first aspect is provided. The method comprises the steps of: determining if a reference wire or a frame wire is to be used to form upper spring of the first pocket spring units and if a reference wire or a frame wire is to be used to form lower spring of the second pocket spring units; feeding the determined upper wire and the determined lower wire; heating the determined wires; bending the determined upper wire and the determined lower wire; cutting each wire to form an upper spring and a lower spring; placing each spring in a fabric pocket; and sealing the pockets by means of welding forming a double layer spring unit. As the manufacturing method allows for use of two different wires for each layer of the mattress, each double layered spring unit can be varied in four different stiffness levels depending on the chosen wire for each layer. This is achieved in a single manufacturing process which provides a high manufacturing rate whilst accomplishing a complex mattress with reinforced edge(s).

In one embodiment, the method comprises arranging the upper spring and the lower spring in a common pocket, and sealing the pocket around the springs and between the upper spring and the lower spring thereby forming one pocket for the upper layer and one pocket for the lower layer, thus forming two pocket spring units together forming the double layer spring unit.. Placing both springs in a larger pocket or sleeve in the fabric and subsequently sealing and thus separating the springs into two pockets is beneficial as the springs are securely held in the respective pockets above each other and will not cause any noise or wear due to two springs coming into contact with each other.

The fabric material may be cut to form a spring string after a predetermined number of double layered spring units are formed.

Each spring string may be attached by means of an adhesive, preferably hot melt adhesive, side by side to another spring string, and between 10 and 50 double layered spring units per meter of spring string, preferably between 10 and 20, even more preferably in the range of 14 spring strings may form a pocket spring mattress with a width of 90 cm.

The pockets may be sealed by means of ultra-sonic welding.

In a third aspect of the teachings herein, a machine for manufacturing a pocket spring mattress is provided. The machine comprises: determining means for determining which upper layer wire and which lower layer wire to be used; feeding means for feeding the determined upper layer wire and the determined lower layer wire; heating means for heating the determined wires; bending means for bending the upper layer wire and for bending the lower layer wire; cutting means for cutting the determined wires to form an upper layer spring and a lower layer spring; placing means for placing each spring in a fabric pocket; and welding means for sealing the pockets forming a double layered spring unit. The machine allows for a great number of possible variations in the mattresses manufactured therein.

The machine may further comprise fabric feeding means for feeding fabric material through the machine.

The machine may also comprise attachment means for attaching each spring string by means of an adhesive, preferably hot melt adhesive, side by side to another spring string. Between 13 to 15 spring strings, preferably 14 spring strings form a pocket spring mattress.

Further objects and advantages of the present invention will be obvious to a person skilled in the art when reading the detailed description below of different embodiments.

### Brief Description of the Drawings

The present invention will be described further below by way of example and with reference to the enclosed drawings. In the drawings:
Fig. 1 is a perspective view of the mattress according to one embodiment,
Fig. 2 is a top view of the mattress according to one embodiment,
Fig. 3 is a perspective view of one corner of the mattress according to one embodiment where the springs are visible, and
Figs. 4-6 are schematic outlines of methods according to embodiments.

### Detailed Description of Embodiments

In the following a mattress 1 will be described. As used in this description the expression "longitudinal" refers to the direction of the length of the mattress, i.e. the normal feet-to-head direction of a person lying on the mattress 1. The expression "transversal" refers to the direction of the width of the mattress. The longitudinal and transversal directions are at right angles to each other. The mattress has normally a rectangular form as seen from above. Thus, the length of the mattress corresponds to the longer sides of the rectangle and the width of the mattress corresponds to the shorter sides of the rectangle. It is for instance common to have mattresses with a length of 200 cm and a width of 90 cm. The terms "upper" and "lower" are used to define the normal position of the mattress 1, i.e. having an upper side onto which the person using the mattress 1 is intended to rest upon, and a lower side forming the underside of the mattress 1 during normal use.

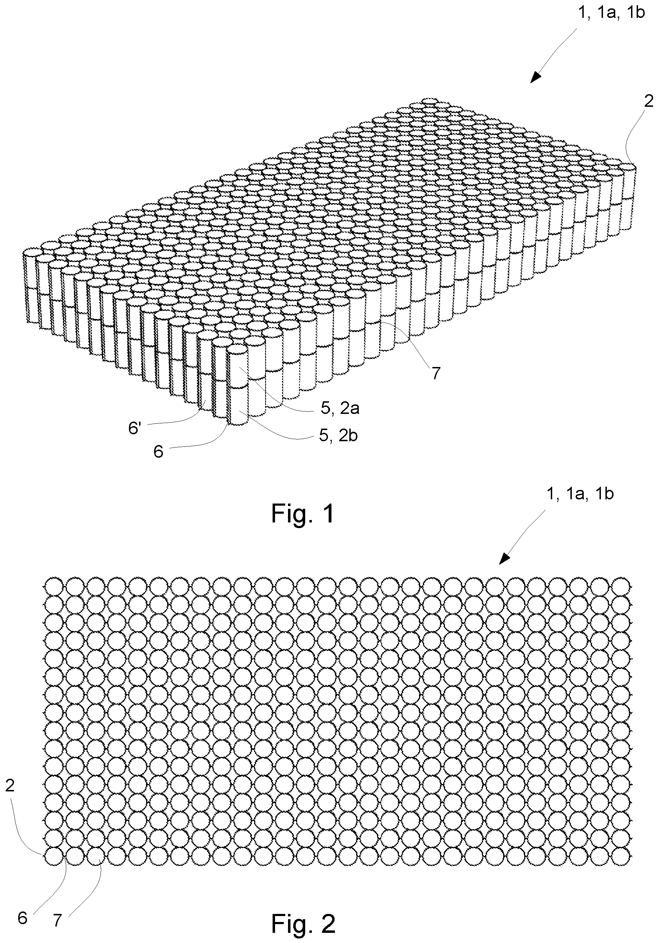

As is seen in Figs. 1 and 2, the mattress 1 comprises a number of spring strings 2 which are arranged side by side such that they together form the mattress 1. A spring string 2 forms one column of the mattress 1. The spring strings 2 may be attached to each other by means of an adhesive such as hot melt adhesive. Other adhesives are also feasible. The spring strings 2 have a longitudinal extension such that they define the length of the mattress 1, i.e. each spring string 2 extends the full length of the mattress 2.

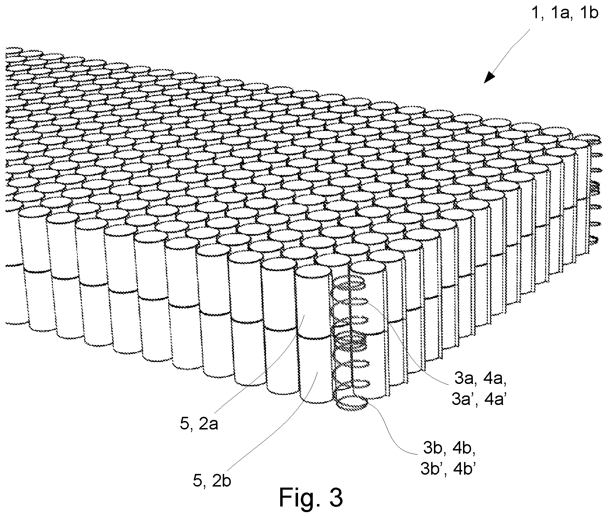

Each spring string 2 further comprises a fabric material 6, which is configured to hold springs 3a, 3b, 4a, 4b (see Fig. 3) in pockets 6' formed in said fabric material 6. The fabric material may e.g. be a nonwoven fabric material, preferably a material comprising thermoplastic material or another material which is suitable for ultrasonic welding or friction welding.

The springs 3a, 3b, 4a, 4b are preferably coil springs, but other spring types are also conceivable.

The pockets 6' enclosing the springs 3a, 3b, 4a, 4b form pocket spring units 5. As can be seen in Figs. 1 to 3, each spring string 2 comprises an upper layer 2a and a lower layer 2b of pocket spring units 5 being arranged axially above each other. Two pocket spring units 5 arranged axially above each other together form a double layered spring unit 7. The entire mattress 1 thus comprises an upper layer 2a and a lower layer 2b of pocket spring units 5.

In each layer 2a, 2b of a spring string 2, a stiffer frame spring 4a, 4b or a less stiff reference spring 3a, 3b may be arranged which means that each double layer spring unit 7 can be configured in four different ways if four springs with different characteristics are used.

The stiffer frame springs have a spring constant in the range of 15% to 30%, more specifically 20% to 25%, and preferably approximately 25% higher than the reference springs. The increased spring constant can be achieved for instance by increasing the diameter of the wire of the springs 3a, 3b, 4a, 4b. An exemplary diameter for the stiffer frame springs 4a, 4b may be approximately 1,9 mm whilst the reference springs 3a, 3b may have a diameter of approximately 1,7 mm. Furthermore, an increase in spring constant for the stiffer frame spring 4a, 4b could be achieved by removing one coil on each of the stiffer springs 4a, 4b.

To achieve reinforced edges on the mattress 1, stiffer frame springs 4a, 4b are arranged in at least one outermost row in at least one of the layers 2a, 2b along the edge of the mattress 1 which is to be reinforced. This edge will not deflect as much as the rest of mattress 1 for a given load.

The exact use of the stiffer frame springs 4a-b can of course be varied; in one embodiment each of the edges of the mattress 1, i.e. the entire circumference of the mattress 1, is provided with one row/column of stiffer springs 4a, 4b in at least one of the upper and lower layer 2a, 2b. Furthermore, in a preferred embodiment, two outermost rows/columns with stiffer springs 4a, 4b may be arranged in each layer 2a, 2b and on each edge of the mattress 1, i.e. around the entire circumference of the mattress 1.

It is to be realized that other combinations are also feasible, such as three outermost rows of stiffer frame springs 4a, 4b in the upper and/or the lower layer 2a, 2b along the longitudinal edges of the mattress 1 and two outermost rows of stiffer frame springs 4a, 4b in the upper and/or the lower layer 2a, 2b along the transversal edges.

Each spring string 2 comprises between 14 and 16 double layer spring units 7 per meter of spring string 2, preferably 15 double layer spring units per meter of spring string 2. A mattress 1 of a typical length of 200 cm thus comprises between 28 and 32, preferably 30 double layer springs unit 7 in the longitudinal direction.

Each spring string 2 is attached by means of an adhesive, preferably hot melt adhesive, side by side to another spring string 2. Between 13 to 16 spring strings 2, preferably approximately 14 spring strings 2 together form a pocket spring mattress 1 with a width of 90 cm.

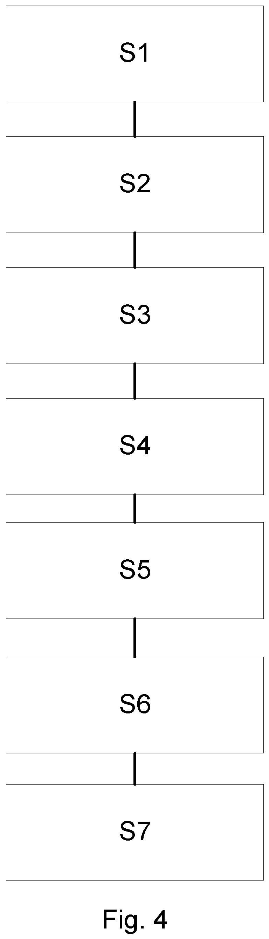

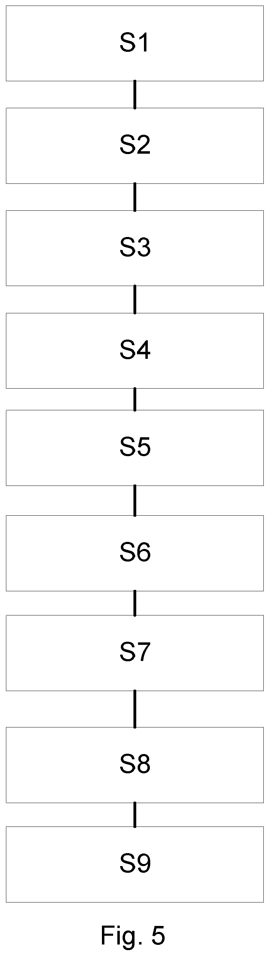

The method of the teachings herein will now be described with simultaneous reference to Figs. 4 and 5. Each spring 3a, 3b, 4a, 4b is manufactured from a corresponding wire 3a', 3b', 4a', 4b'. The method comprises the steps of determining S1 if a reference wire 3a' or a stiffer frame wire 4a' is to be used for the upper layer 2a and if a reference wire 3b' or a stiffer frame wire 4b' is to be used for the lower layer 2b. The method also comprises a step S2 of feeding the determined upper layer wire 3a', 4a' and the determined lower layer wire 3b', 4b', as well as a step S3 of heating the determined wires 3a', 3b', 4a', 4b'. In step S4 the method performs bending the determined upper layer wire 3a', 4a' and the determined lower layer wire 3b', 4b';, while in step S5 each wire 3a', 3b', 4a', 4b' is cut to form an upper layer spring 3a, 4a and to form a lower layer spring 3b, 4b. The method also comprises a step S6 of placing each spring 3a, 3b, 4a, 4b in a fabric pocket 5; and a step S7 of sealing the pockets 5 by means of welding, thereby forming a double layered spring unit 7.

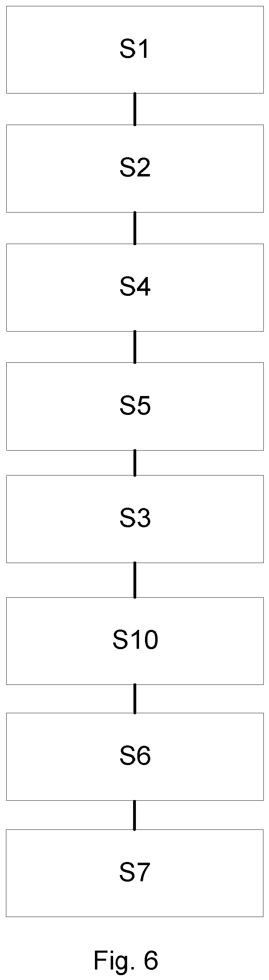

The springs for the upper layer 2a and the lower layer 2b are thus manufactured simultaneously while enabling the alternation of two separate wires with different characteristics for each of the layers 2a, 2b of the spring string 2. Each spring string 2 can be varied in a large number of ways. For instance, if the transversal edges of the mattress 1 are to be reinforced, a spring string 2 of the mattress 1 can be manufactured containing stiffer springs 4a, 4b only in the first and last double layered spring unit 7. The stiffer springs 4a, 4b may be placed in the upper layer 2a, the lower layer 2b or in both layers 2a, 2b. Alternatively as is seen in Fig. 6, the method could be varied such the step of heating S3 the wire(s) is performed after the cutting step S5 and a cooling step S10 may be added after the heating S3 before placing S6 the springs in the pockets 5 of the fabric material.

I.e. an alternative method could be: determining S1 --> feeding S2 --> bending S4 --> cutting S5 --> heating S3 --> cooling S10 --> placing S6 - sealing S7.

It is also to be realized that the pockets 5 may be partially or completely formed before and/or after the springs are placed S6 in the position where each pocket is to be arranged. I.e. the springs could be placed S6 in the pockets 5 of the fabric material before any seam of the pockets 5 is sealed or after that some of the seams of the pockets are sealed and the step of sealing S7 is thereafter performed to complete the formation of each pocket 5.

The upper and lower layer springs 3a, 3b, 4a, 4b may be placed in the same pocket in the fabric material, which is subsequently sealed S7 around and between each spring 3a, 3b, 4a, 4b which forms two pocket spring units 5 arranged axially above one another and together forming a double layer spring unit 7. The sealing of the fabric material is preferably performed by means of ultrasonic welding.

The spring string is in an example cut, in a step S8, when a sufficient number of double layer spring units 7 are formed, for instance between 28 to 32 or preferably 30 double layered spring units 7 for a typical mattress length of 200 cm.

Each spring string 2 may further be attached, in step S9, side by side to another spring string 2 by means of an adhesive such as hot melt and approximately 14 spring strings 2 form a mattress 1 with a typical width of 90 cm.

It should be mentioned that the inventive concept is by no means limited to the embodiments described herein, and several modifications are feasible without departing from the scope of the appended claims. In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims

1. A pocket spring mattress (1) comprising a plurality of double layer spring units (7) arranged in rows and columns to form a rectangular shaped mattress, each double layer spring unit (7) comprising a first (2a) and a second (2b) pocket spring unit, wherein the first pocket spring unit (2a) is arranged axially onto the second pocket spring unit (2b), and wherein each double layer spring unit (7) comprises a number of springs (3a-b, 4a-b) and a fabric pocket (6') enclosing the springs (3a-b, 4a-b), said springs (3a-b, 4a-b) comprising reference springs (3a-b) having a first spring constant and frame springs (4a-b) having a second spring constant being greater than the first spring constant, wherein the pocket spring mattress (1) comprises at least one outermost row or column of the double layered spring units (7) forming an edge of the mattress (1), and wherein frame springs (4a-b) are arranged in the at least one outermost row or column in at least one of the first or second pocket spring units (2a, 2b) in a configuration such that the edge of the mattress (1) is reinforced and such that the reinforced edge does not deflect as much as the rest of the mattress (1) for a given load.

2. The pocket spring mattress (1) according to claim 1, wherein a series of adjacent double layer spring units (7) are attached to each other to form an elongated spring string (2).

3. The pocket spring mattress (1) according to claim 2, wherein each spring string (1) is arranged side by side with another spring string (2) forming an upper spring layer (1a) formed by the first pocket spring units (2a), and a lower spring layer (1b) formed by the second pocket spring units (2b).

4. The pocket spring mattress (1) according to any one of the preceding claims, wherein frame springs (4a-b) are arranged in at least one of the first and second pocket spring units (2a, 2b) of at least two adjacent outermost rows or columns of the double layered spring units (7).

5. The pocket spring mattress (1) according to any one of the preceding claims, wherein frame springs (4a-b) are arranged only in the first pocket spring units (2a) of two adjacent outermost rows and columns of the double layered spring units (7), forming a reinforced edge around the circumference of the mattress (1).

6. The pocket spring mattress (1) according to any one of claims 1-4, wherein frame springs (4a-b) are arranged only in the second pocket spring units (2b) of two adjacent outermost rows and columns of the double layered spring units (7), forming a reinforced edge around the circumference of the mattress (1).

7. The pocket spring mattress (1) according to any one of claims 1-4, wherein frame springs (4a-b) are arranged in the first and second pocket spring units (2a, 2b) of two adjacent outermost rows and columns of the double layered spring units (7), forming a reinforced edge around the circumference of the mattress (1).

8. The pocket spring mattress (1) according to any one of the preceding claims, wherein the second spring constant of the frame springs (4a-b) is at least 15%, and preferably at least 30% higher than the first spring constant of the reference springs (3a-b).

9. The pocket spring mattress (1) according to any one of the preceding claims, wherein a material (6) of the fabric pocket (6') is a nonwoven fabric material comprising thermoplastic material.

10. The pocket spring mattress (1) according to claim 2 or 3, wherein each spring string (2) comprises between 14 and 16 double layer spring units (7) per meter of spring string (2), preferably 15 double layered spring units per meter of spring string (2) and wherein each spring string (2) is attached by means of an adhesive, preferably hot melt adhesive, side by side to another spring string (2).

11. A method for manufacturing a plurality of double layer spring units (7) arranged in a spring string (2) configured to form a mattress (1) according to claim 1, wherein the method comprises the steps of:
determining (S1) if a reference wire (3a') or a frame wire (4a') is to be used to form upper spring of the first pocket spring units (2a) and if a reference wire (3b') or a frame wire (4b') is to be used to form lower spring of the second pocket spring units (2b),
feeding (S2) the determined upper wire (3a', 4a') and the determined lower wire (3b', 4b'),
heating (S3) the determined wires (3a', 3b', 4a', 4b'),
bending (S4) the determined upper wire (3a', 4a') and the determined lower wire (3b', 4b'),
cutting (S5) each wire (3a', 3b', 4a', 4b') to form an upper spring (3a, 4a) and a lower spring (3b, 4b),
placing (S6) each spring (3a, 3b, 4a, 4b) in a fabric pocket (5), and
sealing (S7) the pockets (5) by means of welding forming a double layer spring unit (7).

12. The method according to claim 11, further comprising arranging the upper spring (3a, 4a) and the lower spring (3b, 4b) in a common pocket (5), and sealing (S7) the pocket (5) around the springs (3a, 3b, 4a, 4b) and between the upper spring (3a, 4a) and the lower spring (3b, 4b) thereby forming one pocket (5) for the upper layer (2a) and one pocket (5) for the lower layer (2b), thus forming two pocket spring units (5) together forming the double layer spring unit (7).

13. The method according to claim 11 or 12, wherein the fabric material (6) is cut (S8) to form a spring string (2) after a predetermined number of double layered spring units (7) are formed.

14. The method according to claim 13, further comprising attaching (S9) each spring string (2) by means of an adhesive, preferably hot melt adhesive, or by ultra-sonic welding, side by side to another spring string (2).

15. The method according to any one of claims 12 to 14, further comprising sealing (S7) the pockets (5) by means of ultra-sonic welding.

## Patentansprüche

1. Taschenfedermatratze (1), die eine Vielzahl von Doppelschicht-Federeinheiten (7) umfasst, die in Reihen und Spalten angeordnet sind, um eine rechteckig geformte Matratze zu bilden, wobei jede Doppelschicht-Federeinheit (7) eine erste (2a) und eine zweite (2b) Taschenfedereinheit umfasst, wobei die erste Taschenfedereinheit (2a) axial auf der zweiten Taschenfedereinheit (2b) angeordnet ist, und wobei jede Doppelschicht-Federeinheit (7) eine Anzahl von Federn (3a-b, 4a-b) und eine Stofftasche (6') umfasst, die die Federn (3a-b, 4a-b) einschließt, wobei die Federn (3a-b, 4a-b) Referenzfedern (3a-b) mit einer ersten Federkonstante und Rahmenfedern (4a-b) mit einer zweiten Federkonstante, die größer als die erste Federkonstante ist, umfassen, wobei die Taschenfedermatratze (1) mindestens eine äußerste Reihe oder Spalte der Doppelschicht-Federeinheiten (7) umfasst, die einen Rand der Matratze (1) bilden, und wobei Rahmenfedern (4a-b) in der mindestens einen äußersten Reihe oder Spalte in mindestens einer der ersten oder zweiten Taschenfedereinheiten (2a, 2b) in einer solchen Konfiguration angeordnet sind, dass der Rand der Matratze (1) verstärkt ist und dass der verstärkte Rand sich bei einer gegebenen Belastung nicht so stark durchbiegt wie der Rest der Matratze (1).

2. Taschenfedermatratze (1) nach Anspruch 1, bei der eine Reihe benachbarter Doppelschicht-Federeinheiten (7) aneinander befestigt sind, um einen langgestreckten Federkern (2) zu bilden.

3. Taschenfedermatratze (1) nach Anspruch 2, wobei jeder Federkern (1) Seite an Seite mit einem anderen Federkern (2) angeordnet ist und eine obere Federschicht (1a) bildet, die von den ersten Taschenfedereinheiten (2a) gebildet wird, und eine untere Federschicht (1b), die von den zweiten Taschenfedereinheiten (2b) gebildet wird.

4. Taschenfedermatratze (1) nach einem der vorhergehenden Ansprüche, wobei Rahmenfedern (4a-b) in mindestens einer der ersten und zweiten Taschenfedereinheiten (2a, 2b) von mindestens zwei benachbarten äußersten Reihen oder Spalten der Doppelschicht-Federeinheiten (7) angeordnet sind.

5. Taschenfedermatratze (1) nach einem der vorhergehenden Ansprüche, wobei Rahmenfedern (4a-b) nur in den ersten Taschenfedereinheiten (2a) von zwei benachbarten äußersten Reihen und Spalten der Doppelschicht-Federeinheiten (7) angeordnet sind und einen verstärkten Rand um den Umfang der Matratze (1) bilden.

6. Taschenfedermatratze (1) nach einem der Ansprüche 1 bis 4, wobei Rahmenfedern (4a-b) nur in den zweiten Taschenfedereinheiten (2b) von zwei benachbarten äußersten Reihen und Spalten der Doppelschicht-Federeinheiten (7) angeordnet sind und einen verstärkten Rand um den Umfang der Matratze (1) bilden.

7. Taschenfedermatratze (1) nach einem der Ansprüche 1 bis 4, wobei Rahmenfedern (4a-b) in den ersten und zweiten Taschenfedereinheiten (2a, 2b) von zwei benachbarten äußersten Reihen und Spalten der Doppelschicht-Federeinheiten (7) angeordnet sind und einen verstärkten Rand um den Umfang der Matratze (1) bilden.

8. Taschenfedermatratze (1) nach einem der vorhergehenden Ansprüche, wobei die zweite Federkonstante der Rahmenfedern (4a-b) mindestens 15 %, vorzugsweise mindestens 30 % höher ist als die erste Federkonstante der Referenzfedern (3a-b).

9. Taschenfedermatratze (1) nach einem der vorhergehenden Ansprüche, wobei ein Material (6) der Stofftasche (6') ein Vliesstoffmaterial ist, das thermoplastisches Material umfasst.

10. Taschenfedermatratze (1) nach Anspruch 2 oder 3, wobei jeder Federkern (2) zwischen 14 und 16 Doppelschicht-Federeinheiten (7) pro Meter Federkern (2), vorzugsweise 15 Doppelschicht-Federeinheiten pro Meter Federkern (2), umfasst und wobei jeder Federkern (2) mittels eines Klebstoffs, vorzugsweise Schmelzklebstoffs, nebeneinander an einem anderen Federkern (2) befestigt ist.

11. Verfahren zum Herstellen einer Vielzahl von Doppelschicht-Federeinheiten (7), die in einem Federkern (2) angeordnet sind, der konfiguriert ist, um eine Matratze (1) nach Anspruch 1 zu bilden, wobei das Verfahren die folgenden Schritte umfasst:
Bestimmen (S1), ob ein Referenzdraht (3a') oder ein Rahmendraht (4a') verwendet werden soll, um die obere Feder der ersten Taschenfedereinheiten (2a) zu bilden, und ob ein Referenzdraht (3b') oder ein Rahmendraht (4b') verwendet werden soll, um die untere Feder der zweiten Taschenfedereinheiten (2b) zu bilden,
Zuführen (S2) des bestimmten oberen Drahtes (3a', 4a') und des bestimmten unteren Drahtes (3b', 4b'),
Erhitzen (S3) der ermittelten Drähte (3a', 3b', 4a', 4b'),
Biegen (S4) des bestimmten oberen Drahtes (3a', 4a') und des bestimmten unteren Drahtes (3b', 4b'),
Schneiden (S5) jedes Drahtes (3a', 3b', 4a', 4b') zur Bildung einer oberen Feder (3a, 4a) und einer unteren Feder (3b, 4b),
Anordnen (S6) jeder Feder (3a, 3b, 4a, 4b) in einer Stofftasche (5), und
Versiegeln (S7) der Taschen (5) durch Schweißen unter Bildung einer Doppelschicht-Federeinheit (7).

12. Verfahren nach Anspruch 11, ferner umfassend das Anordnen der oberen Feder (3a, 4a) und der unteren Feder (3b, 4b) in einer gemeinsamen Tasche (5) und das Abdichten (S7) der Tasche (5) um die Federn (3a, 3b, 4a, 4b) und zwischen der oberen Feder (3a, 4a) und der unteren Feder (3b, 4b), wodurch eine Tasche (5) für die obere Schicht (2a) und eine Tasche (5) für die untere Schicht (2b) gebildet wird, wodurch zwei Taschenfedereinheiten (5) gebildet werden, die zusammen die Doppelschicht-Federeinheit (7) bilden.

13. Verfahren nach Anspruch 11 oder 12, wobei das Stoffmaterial (6) geschnitten (S8) wird, um einen Federkern (2) zu bilden, nachdem eine vorbestimmte Anzahl von Doppelschicht-Federeinheiten (7) gebildet worden ist.

14. Verfahren nach Anspruch 13, ferner umfassend das Befestigen (S9) jedes Federkerns (2) mittels eines Klebstoffs, vorzugsweise Schmelzklebstoffs, oder durch Ultraschallschweißen, nebeneinander an einem anderen Federkern (2).

15. Verfahren nach einem der Ansprüche 12 bis 14, ferner umfassend das Versiegeln (S7) der Taschen (5) durch Ultraschallschweißen.

## Revendications

1. Matelas (1) à ressorts ensachés comprenant une pluralité d'unités de ressorts en double couche (7) agencées en rangées et colonnes pour former un matelas de forme rectangulaire, chaque unité de ressorts en double couche (7) comprenant une première unité de ressort ensaché (2a) et une seconde unité de ressort ensaché (2b), dans lequel la première unité de ressort ensaché (2a) est agencée axialement sur la seconde unité de ressort ensaché (2b), et dans lequel chaque unité de ressorts en double couche (7) comprend un certain nombre de ressorts (3a-b, 4a-b) et une poche en tissu (6') entourant les ressorts (3a-b, 4a-b), lesdits ressorts (3a-b, 4a-b) comprenant des ressorts de référence (3a-b) ayant une première constante de ressort et des ressorts de cadre (4a-b) ayant une seconde constante de ressort qui est plus grande que la première constante de ressort, dans lequel le matelas (1) à ressorts ensachés comprend au moins une rangée ou colonne extérieure d'unités de ressorts en double couche (7) formant un bord du matelas (1), et dans lequel des ressorts de cadre (4a-b) sont agencés dans l'au moins une rangée ou colonne extérieure dans au moins une parmi les premières ou secondes unités de ressorts ensachés (2a, 2b) dans une configuration telle que le bord du matelas (1) est renforcé et telle que le bord renforcé ne dévie pas autant que le reste du matelas (1) pour une charge donnée.

2. Matelas (1) à ressorts ensachés selon la revendication 1, dans lequel une série d'unités de ressorts en double couche (7) adjacentes sont fixées les unes aux autres pour former une chaîne de ressorts (2) allongée.

3. Matelas (1) à ressorts ensachés selon la revendication 2, dans lequel chaque chaîne de ressorts (1) est agencée côte à côte avec une autre chaîne de ressorts (2) formant une couche (1a) de ressorts supérieure formée par les premières unités de ressorts ensachés (2a), et une couche (1b) de ressorts inférieure formée par les secondes unités de ressorts ensachés (2b).

4. Matelas (1) à ressorts ensachés selon l'une quelconque des revendications précédentes, dans lequel des ressorts de cadre (4a-b) sont agencés dans au moins une parmi les premières et secondes unités de ressorts ensachés (2a, 2b) d'au moins deux rangées ou colonnes extérieures adjacentes des unités de ressorts en double couche (7).

5. Matelas (1) à ressorts ensachés selon l'une quelconque des revendications précédentes, dans lequel des ressorts de cadre (4a-b) sont agencés uniquement dans les premières unités de ressorts ensachés (2a) de deux rangées et colonnes extérieures adjacentes des unités à ressorts en double couche (7), formant un bord renforcé autour de la circonférence du matelas (1).

6. Matelas (1) à ressorts ensachés selon l'une quelconque des revendications 1 à 4, dans lequel des ressorts de cadre (4a-b) sont agencés uniquement dans les secondes unités de ressorts ensachés (2b) de deux rangées et colonnes extérieures adjacentes des unités de ressorts en double couche (7), formant un bord renforcé autour de la circonférence du matelas (1).

7. Matelas (1) à ressorts ensachés selon l'une quelconque des revendications 1 à 4, dans lequel des ressorts de cadre (4a-b) sont agencés dans les premières et secondes unités de ressorts ensachés (2a, 2b) de deux rangées et colonnes extérieures adjacentes des unités de ressorts en double couche (7), formant un bord renforcé autour de la circonférence du matelas (1).

8. Matelas (1) à ressorts ensachés selon l'une quelconque des revendications précédentes, dans lequel la seconde constante de ressort des ressorts de cadre (4a-b) est au moins 15 %, et de préférence au moins 30 % plus élevée que la première constante de ressort des ressorts de référence (3a-b).

9. Matelas (1) à ressorts ensachés selon l'une quelconque des revendications précédentes, dans lequel un matériau (6) de la poche en tissu (6') est un matériau de tissu non tissé comprenant un matériau thermoplastique.

10. Matelas (1) à ressorts ensachés selon la revendication 2 ou 3, dans lequel chaque chaîne de ressorts (2) comprend entre 14 et 16 unités de ressorts en double couche (7) par mètre de chaîne de ressorts (2), de préférence 15 unités de ressorts en double couche par mètre de chaîne de ressorts (2) et dans lequel chaque chaîne de ressorts (2) est fixée au moyen d'un adhésif, de préférence un adhésif thermofusible, côte à côte avec une autre chaîne de ressorts (2).

11. Procédé pour fabriquer une pluralité d'unités de ressorts en double couche (7) agencées dans une chaîne de ressorts (2) configurée pour former un matelas (1) selon la revendication 1, dans lequel le procédé comprend les étapes consistant à :
déterminer (S1) si un fil (3a') de référence ou un fil (4a') de cadre doit être utilisé pour former un ressort supérieur des premières unités de ressorts ensachés (2a) et si un fil (3b') de référence ou un fil (4b') de cadre doit être utilisé pour former un ressort inférieur des secondes unités de ressorts ensachés (2b),
acheminer (S2) le fil (3a', 4a') supérieur déterminé et le fil (3b', 4b') inférieur déterminé,
chauffer (S3) les fils (3a', 3b', 4a', 4b') déterminés,
courber (S4) le fil (3a', 4a') supérieur déterminé et le fil (3b', 4b') inférieur déterminé,
couper (S5) chaque fil (3a', 3b', 4a', 4b') pour former un ressort (3a, 4a) supérieur et un ressort (3b, 4b) inférieur,
placer (S6) chaque ressort (3a, 3b, 4a, 4b) dans une poche (5) en tissu, et
sceller (S7) les poches (5) au moyen d'un soudage formant une unité à ressorts double couche (7).

12. Procédé selon la revendication 11, comprenant en outre l'agencement du ressort (3a, 4a) supérieur et du ressort (3b, 4b) inférieur dans une poche (5) commune, et le scellement (S7) de la poche (5) autour des ressorts (3a, 3b, 4a, 4b) et entre le ressort (3a, 4a) supérieur et le ressort (3b, 4b) inférieur, formant ainsi une poche (5) pour la couche (2a) supérieure et une poche (5) pour la couche (2b) inférieure, formant par conséquent deux unités de ressorts ensachés (5) formant ensemble l'unité de en ressorts double couche (7).

13. Procédé selon la revendication 11 ou 12, dans lequel le matériau (6) de tissu est coupé (S8) pour former une chaîne de ressorts (2) après qu'un nombre prédéterminé d'unités de ressorts en double couche (7) a été formé.

14. Procédé selon la revendication 13, comprenant en outre la fixation (S9) de chaque chaîne de ressorts (2) au moyen d'un adhésif, de préférence un adhésif thermofusible, ou par un soudage par ultrasons, côte à côte avec une autre chaîne de ressorts (2).

15. Procédé selon l'une quelconque des revendications 12 à 14, comprenant en outre le scellement (S7) des poches (5) au moyen d'un soudage par ultrasons.
